# FASCICULE DE BREVET EUROPEEN

(11) **EP 1 989 464 B1**
(45) Date de publication et mention de la délivrance du brevet: **29.07.2009**
(21) Numéro de dépôt: 07704694.4
(22) Date de dépôt: 21.02.2007
(51) Int. Cl.: F16F 9/512, B60G 15/06

(54) **SYSTEME D'AMORTISSEMENT A DETENTE RAPIDE MONTE EN JAMBE DE FORCE**
ALS EIN FEDERBEIN MONTIERTES DÄMPFUNGSSYSTEM MIT SCHNELLER ENTSPANNUNG
RAPID RELAXATION DAMPING SYSTEM MOUNTED AS A STRUT

(30) Priorité: 27.02.2006 FR 0601735
(43) Date de publication de la demande: 12.11.2008
(73) Titulaire: BOS S.a.r.l., 31200 Toulouse (FR); Bossard, Olivier, 31270 Cugnaux (FR)
(72) Inventeur: BOSSARD, Olivier, F-31270 Cugnaux (FR)
(74) Mandataire: Ravina, Bernard
(86) Numéro de dépôt international: PCT/EP2007/051693
(87) Numéro de publication internationale: WO 2007/096397

(56) Documents cités:
- WO-A2-20/04040164
- DE-A1- 10 122 729
- FR-A- 2 796 431
- FR-A- 2 868 493

## Description

### Domaine technique

La présente invention est relative à un système d'amortissement à détente rapide pour véhicule, monté en jambe de force, destiné à être interposé mécaniquement entre une partie non suspendue d'un véhicule et une partie suspendue de ce dernier.

### Etat de la technique

On connaît de l'état de la technique des amortisseurs à détente rapide. De tels amortisseurs sont conçus afin que le contact de la roue avec le sol soit rétabli le plus rapidement possible après que la roue a quitté le sol. Un tel amortisseur est décrit dans la demande de brevet FR 2 868 493. Selon cette demande, l'amortisseur comprend un corps cylindrique dans lequel est formé un alésage cylindrique dans lequel est monté en glissement un piston de travail divisant le volume cylindrique interne du corps de l'amortisseur en deux chambres de travail. Le piston est relié à une tige creuse dans laquelle est montée en coulissement une tringle de manoeuvre d'un dispositif de décharge, cette tringle étant reliée à un corps mobile destiné à être fixé à l'une des parties suspendue ou non suspendue du véhicule. Le dispositif de décharge est constitué par un pointeau fixé à la tringle de manoeuvre et par un siège de pointeau monté dans la tige creuse au niveau du piston sur un passage de fluide établi entre les deux chambres de travail.

### Divulgation de l'invention

### Problème technique

Les amortisseurs à détente rapide de l'état de la technique ne peuvent pas être utilisés en jambe de force par exemple dans des suspensions du type « Mac-Pherson » ce qui réduit leur champ d'application.

### Solution technique

La présente invention a pour objet de résoudre l'inconvénient précité.

À cet effet le système d'amortissement à détente rapide selon l'invention, monté en jambe de force, comprend un amortisseur à détente rapide constitué d'un corps d'amortisseur dans lequel est formé un alésage cylindrique recevant en glissement un piston avec tige, divisant le volume interne du corps d'amortisseur en deux chambres de travail en relation l'une avec l'autre par l'intermédiaire de moyens calibrés de passage de fluide, portés par le piston, dont la tige creuse reçoit un moyen de commande d'un dispositif de décharge associé au piston, et pouvant prendre une position d'ouverture d'un passage de décharge entre les deux chambres de travail permettant une détente rapide et une position de fermeture totale ou partielle interdisant la détente rapide, ledit système comportant un agencement de jambe de force disposé autour de l'amortisseur et formé par au moins un tube engagé autour de la tige du piston et comportant en extrémité une disposition de paroi transversale à laquelle est solidarisée l'extrémité de la tige de l'amortisseur, et le moyen de commande extérieurement au dit tube coopérant avec un équipage mobile présentant une portée interne de guidage engagée en coulissement sur une portée externe solidaire du tube précité, ledit équipage mobile présentant une latitude de déplacement axial limité sur ladite portée et étant destiné à être fixé à l'une des parties suspendues ou non suspendues du véhicule.

Le moyen de commande est fonctionnellement interposé entre l'équipage et le dispositif de décharge. Le moyen de commande réagit aux déplacements de l'équipage mobile sur la portée de guidage et agit sur le dispositif de détente pour en modifier l'état d'ouverture ou de fermeture du système de détente est déterminé par la position de l'équipage mobile sur la portée de guidage. Ainsi ce moyen de commande transmet au dispositif de décharge une information relative à la position axiale de l'équipage mobile sur la portée de guidage et le dispositif décharge se positionne ou est positionné en ouverture ou fermeture en fonction du contenu de l'information transmise.

Selon une autre caractéristique de l'invention, le moyen de commande comporte un dispositif de réglage engagé dans un perçage traversant de la disposition de paroi transversale.

Selon une autre caractéristique de l'invention, le moyen de commande est constitué par une tringle de commande.

Selon une variante de réalisation, le moyen de commande est constitué par un fluide hydraulique.

Selon une autre caractéristique de l'invention, l'équipage mobile est constitué d'une coiffe à laquelle est solidarisé un fourreau de guidage, tubulaire, dans lequel est pratiquée la portée interne de guidage.

Selon une autre caractéristique de l'invention, l'équipage mobile et la disposition de paroi transversale déterminent une chambre recevant un moyen élastique agissant en poussée sur l'équipage mobile et sur la disposition de paroi transversale dans le sens de l'ouverture du passage de décharge.

Selon une autre caractéristique de l'invention, sont prévues deux butées distantes l'une de l'autre, aptes à limiter le mouvement axial de l'équipage mobile par rapport au tube, au moins l'une de ces deux butées étant formée sur la disposition de paroi transversale.

Selon une autre caractéristique de l'invention, la disposition de paroi transversale comprend une tête sous forme d'embout tubulaire, fixée rigidement au tube terminal et prolongeant axialement ce dernier, un bouchon d'obturation étant engagé en vissage dans la tête, ledit bouchon comportant un perçage traversant axial dans lequel est monté en fixation un embout de guidage présentant un alésage axial de guidage dans lequel est guidé axialement le dispositif de réglage associé à la tringle de commande, ledit embout de guidage présentant un collet venant contre un épaulement interne du bouchon d'obturation et extérieurement au dit bouchon une section filetée sur laquelle est engagée en vissage un écrou de blocage afin que sous l'effet de son vissage sur la section filetée, l'écrou soit appliqué contre le bouchon et le collet de l'embout de guidage soit sollicité vers l'épaulement du bouchon, ladite disposition de paroi transversale présentant deux butées distantes l'une de l'autre, aptes à limiter le mouvement axial de l'équipage mobile par rapport au tube, l'une des deux butées étant constituée par un collet que présente le bouchon d'obturation, ledit collet formant saillie annulaire par rapport à l'embout tubulaire de la tête, l'autre butée étant constituée par l'une des faces normales à l'axe longitudinal, que présente la tête, le fourreau de l'équipage mobile comportant un épaulement interne prévu pour venir en butée contre le collet du bouchon d'obturation.

Selon une variante d'exécution, la disposition de paroi transversale se présente sous la forme d'un disque comportant un filetage par lequel elle est engagée en vissage dans un taraudage du premier tube de l'agencement de jambe de force pour être fixée à ce dernier et le mouvement axial de l'équipage mobile est limité par deux butées dont une est constituée par un épaulement de la portée de guidage contre lequel est destiné à venir buter un épaulement interne du fourreau de l'équipage mobile et dont l'autre est constituée par la face du disque, interne à la chambre du moyen élastique, la coiffe de l'équipage mobile, par sa face interne à la chambre du moyen élastique, étant destinée à venir buter contre le disque en position d'obturation total ou partiel du passage de décharge.

### Brève description des dessins

D'autres avantages, buts et caractéristiques de l'invention apparaîtront à la lecture de la description de deux formes préférées de réalisation données à titre d'exemples non limitatifs en se référant aux dessins annexés en lesquels :

- la figure 1 est une vue en perspective d'un système d'amortissement selon une première forme de réalisation,

- la figure 2 est une vue en coupe longitudinale d'un système d'amortissement selon la première forme de réalisation, en position d'obturation du passage de décharge,

- la figure 3 montre selon une échelle agrandie le détail A de la figure 2, le passage de décharge étant fermé,

- la figure 4 montre selon une échelle agrandie le détail B de la figure 2, le passage de décharge étant fermé,

- la figure 5 montre selon une échelle agrandie le détail A de la figure 2, le passage de décharge étant ouvert,

- la figure 6 montre selon une échelle agrandie le détail B de la figure 2, le passage de décharge étant ouvert,

- la figure 7 est une vue en perspective d'un système d'amortissement selon une seconde forme de réalisation,

- la figure 8 est une vue en coupe longitudinale du système d'amortissement selon la seconde forme de réalisation, en position de dégagement du passage de décharge,

- la figure 9 montre selon une échelle agrandie le détail A de la figure 8, le passage de décharge étant fermé,

- la figure 10 montre selon une échelle agrandie le détail B de la figure 8, le passage de décharge étant fermé,

- la figure 11 montre selon une échelle agrandie le détail A de la figure 8, le passage de décharge étant ouvert,

- la figure 12 montre selon une échelle agrandie le détail B de la figure 8, le passage de décharge étant ouvert.

### Meilleur mode de réalisation de l'invention

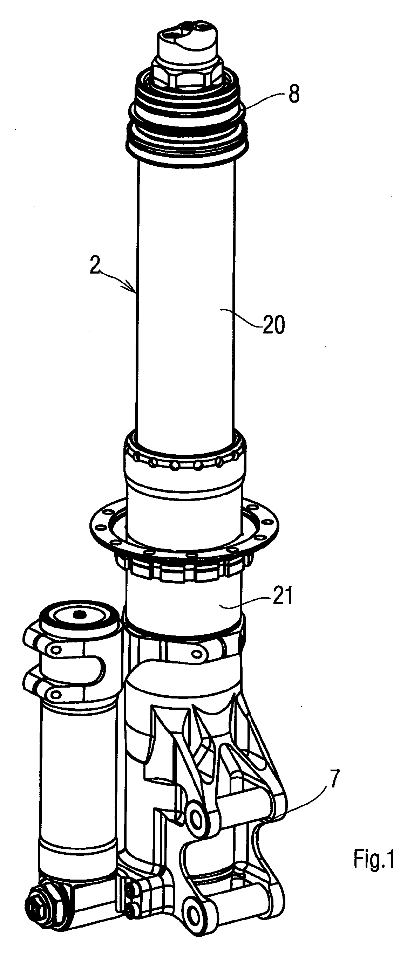

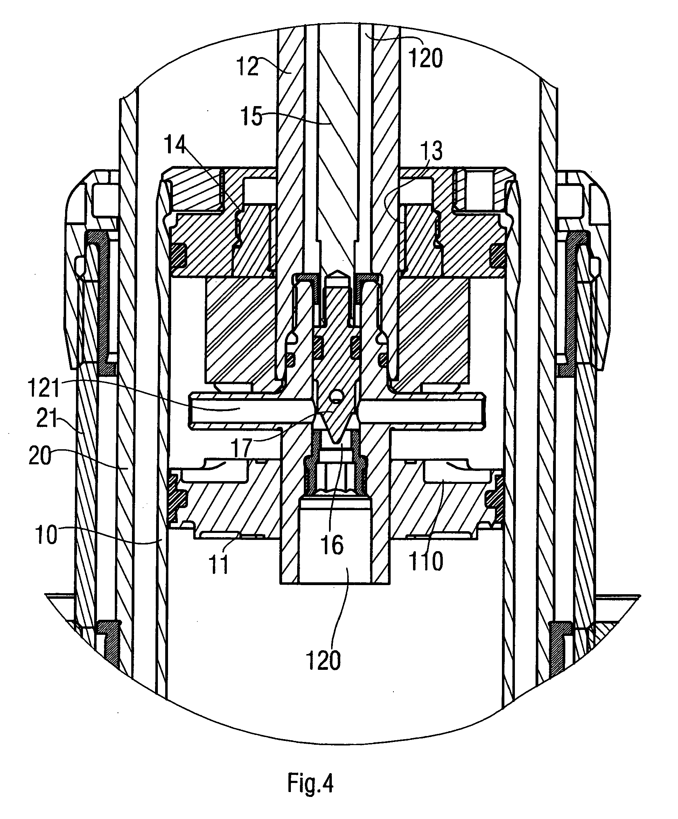

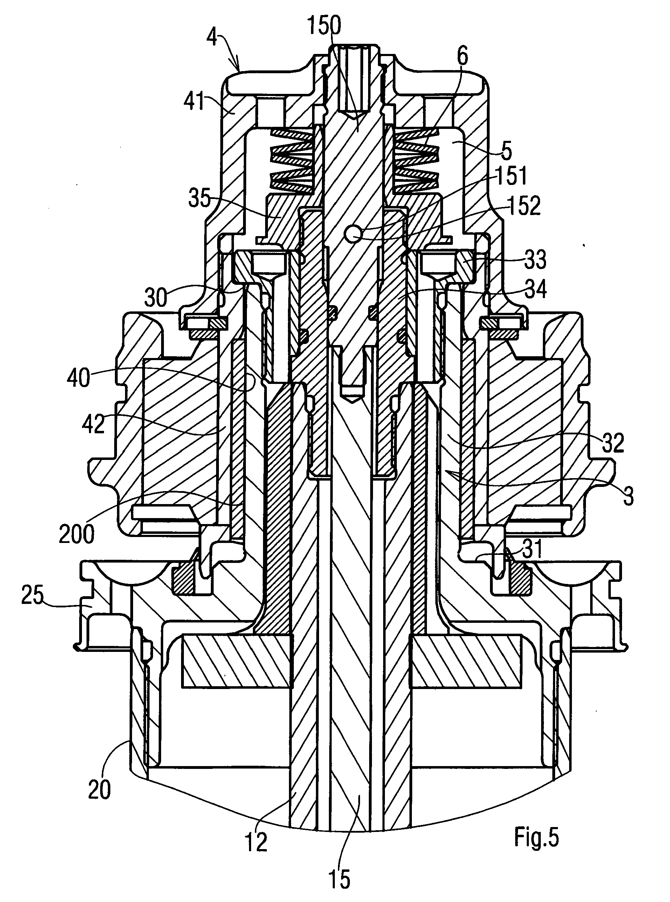

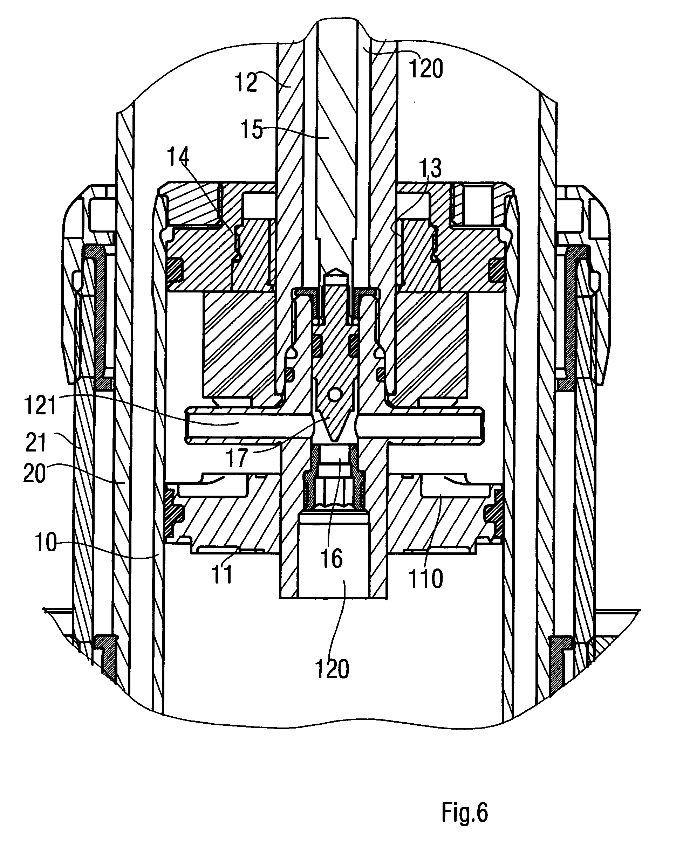

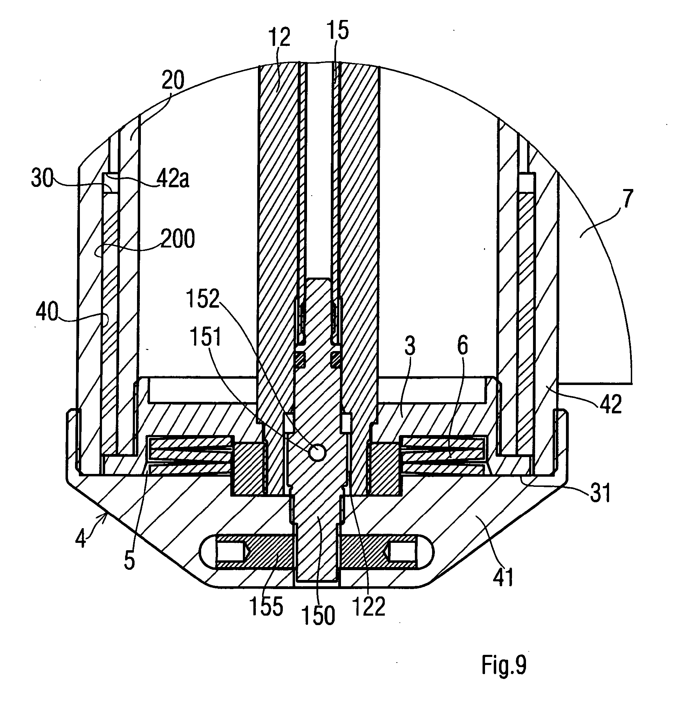

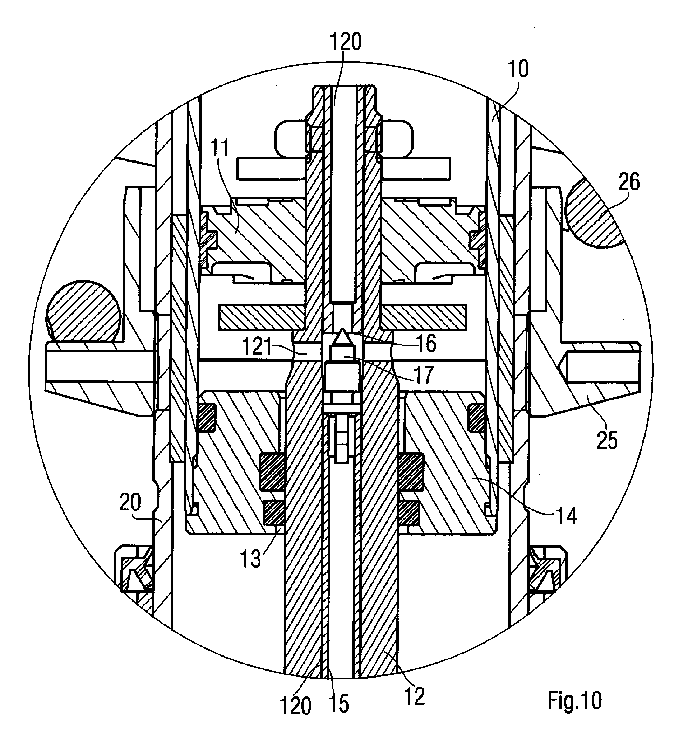

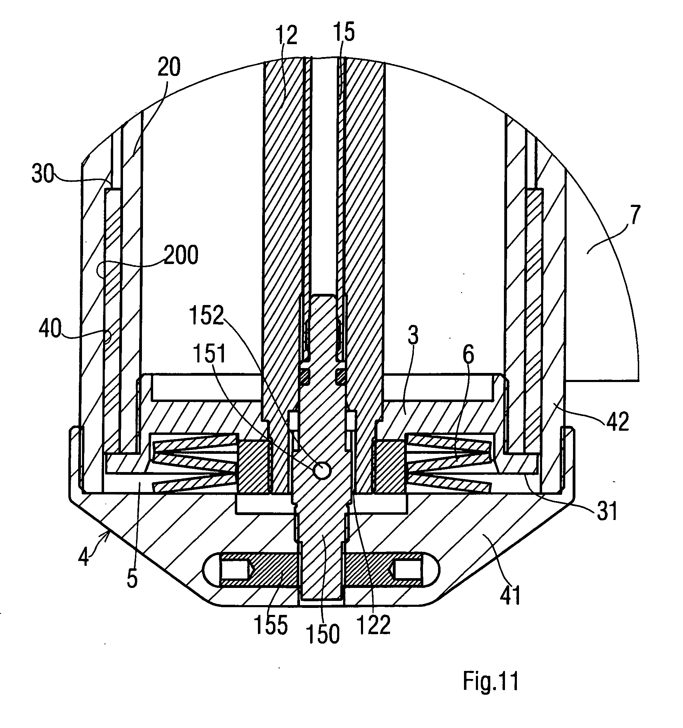

En figures 1 à 12 sont représentées deux formes préférées de réalisation d'un système d'amortissement à détente rapide pour véhicule monté en jambe de force et ce entre une partie non suspendue de ce véhicule, par exemple la roue et une partie suspendue du véhicule à savoir le châssis. Ce système comprend un premier moyen 7 de fixation à la partie non suspendue du véhicule, et un second moyen de fixation 8 à la partie suspendue du véhicule.

Ce système comprend un amortisseur 1 à détente rapide, associé à un agencement 2 en jambe de force.

L'amortisseur est constitué 1 d'un corps d'amortisseur 10 dans lequel est formé un alésage borgne 100 de préférence cylindrique. Dans ce corps d'amortisseur 10 est monté en glissement un piston 11 pourvu d'une tige 12 rigide de piston engagée en glissement dans l'alésage traversant 13 d'un bouchon d'obturation 14 fixé par vissage au corps de l'amortisseur, un élément d'étanchéité assurant l'étanchéité autour de la tige 12 au niveau de l'alésage 13 du bouchon 14.

Le piston 11 divise l'alésage interne 100 du corps d'amortisseur en deux chambres de travail à savoir une chambre inférieure et une chambre supérieure et comporte des moyens calibrés 110 de passage d'un fluide de travail d'une chambre à l'autre et ce en fonction des mouvements du piston 11 et par voie de conséquences des efforts à amortir communiqués au système d'amortissement par les parties suspendue et non suspendue du véhicule. La tige 12 du piston 11 s'étend dans la chambre inférieure de travail.

Au niveau du piston 11 est monté un dispositif de décharge rapide assurant une libre communication entre les deux chambres de travail lorsque la force de réaction du sol sur la masse non suspendue du véhicule est nulle ou inférieure à une valeur prédéterminée afin que cette masse non suspendue, par l'intermédiaire du pneumatique de la roue, reprenne contact avec le sol aussi rapidement que possible.

Avantageusement la tige 12 du piston 11 comporte un alésage axial 120 traversant et le dispositif de décharge est monté dans la tige 12 du piston, cette dernière recevant de plus un moyen de commande 15 de ce dispositif de décharge. Ce moyen, selon une première forme de réalisation, tel qu'illustré aux figures 1 à 12, est constitué par au moins une tringle rigide montée en coulissement dans l'alésage 120 de la tige 12.

Le dispositif de décharge assure l'ouverture ou la fermeture totale ou partielle d'au moins un passage de décharge formé dans la tige entre les deux chambres de travail et comprend au moins un siège de pointeau 16, monté dans la tige 12 sur le passage de décharge et au moins un pointeau 17 fixé en bout de la tringle de commande 15 et pouvant occuper soit une position d'ouverture du passage en étant écarté du siège 16, soit une position d'obturation du passage en venant contre le siège 16 ou faible de distance de ce dernier afin de laisser subsister dans ce cas, une section de laminage.

Le passage de décharge est formé par la partie supérieure de l'alésage 120 de la tige 12, partie au dessus du siège 16, et communiquant axialement avec la chambre supérieure. Le passage de décharge est également formé par au moins un perçage traversant radial 121 pratiqué dans la paroi de la tige 12, ce perçage étant en communication d'une part avec la chambre de travail inférieure et avec la partie de l'alésage de la tige située en dessous du siège 16 de pointeau 17.

L'agencement de jambe de force 2 comprend au moins un premier tube 20 lequel est monté en coulissement sur le corps cylindrique 10 de l'amortisseur et est fixé à la tige 12 du piston. Ce tube reçoit une première coupelle 25 constituant un appui à un ressort d'amortisseur 26 coaxial au corps d'amortisseur. Ce ressort par son autre extrémité prend appui sur une seconde coupelle 27 fixe par rapport au corps d'amortisseur.

Selon la forme de réalisation des figures 1 à 6, l'agencement de jambe de force 2 comporte deux tubes 20, 21 montés en coulissement l'un dans l'autre. Le premier tube 20 est monté en coulissement sur le corps d'amortisseur et est fixé à la tige d'amortisseur 12 tandis que le second tube 21 de jambe de force est fixé au corps 10 d'amortisseur, la seconde coupelle 23 d'appui du ressort étant fixée à ce second tube 21.

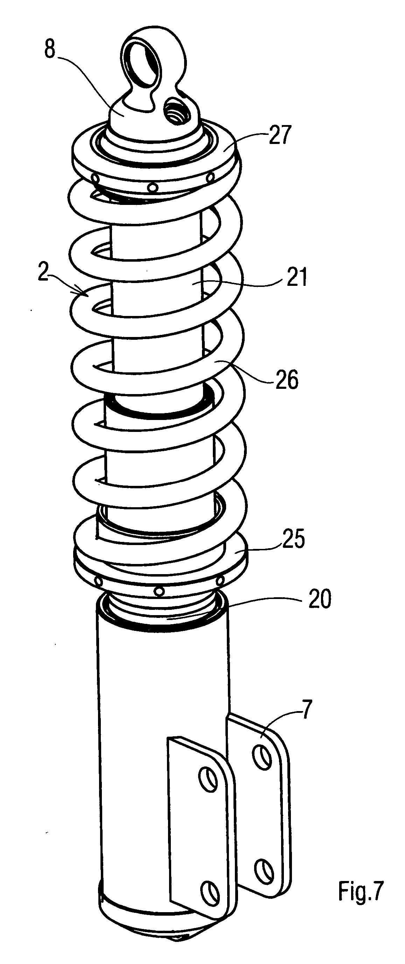

Selon la forme de réalisation des figures 7 à 12, l'agencement de jambe de force 2 ne comporte qu'un seul tube 20, la seconde coupelle d'appui 27 du ressort 26 étant fixée au corps d'amortisseur.

Conformément à l'invention, le premier tube 20 comporte en extrémité une disposition de paroi transversale 3 à laquelle est solidarisée l'extrémité de la tige 12 de l'amortisseur et le moyen de commande 15, extérieurement à ce premier tube 20 est solidaire d'un équipage 4, mobile relativement au premier tube 20 et à la disposition de paroi transversale 3.

Dans la suite de la description, l'équipage 4 sera désigné par les termes équipage mobile, indépendamment du fait que cet équipage soit fixé ou non à la masse suspendue ou non suspendue du véhicule. À ce sujet on peut remarquer que l'équipage mobile 4, selon la forme de réalisation des figures 1 à 6, reçoit en fixation le moyen 7 de fixation à la partie suspendue du véhicule, et occupe une position axialement fixe par rapport à ladite partie suspendue, tandis que selon la forme de réalisation objet des figures 7 à 12, l'équipage mobile reçoit en fixation le moyen de fixation 8 à la partie non suspendue du véhicule. Dans la première forme de réalisation du système de suspension, l'équipage mobile occupe une position supérieure, tandis que dans la seconde forme de réalisation du système d'amortissement, l'équipage mobile occupe une position inférieure.

L'équipage mobile 4 présente une portée interne 40 de guidage engagée en coulissement sur une portée externe 200 de guidage solidaire du premier tube 20. En combinaison avec ces caractéristiques techniques, l'équipage mobile 4 présente une latitude de déplacement axial limité sur ladite portée et est destiné à être fixé à l'une des parties suspendues ou non suspendues du véhicule.

Selon la forme préférée de réalisation, l'équipage mobile 4 est constitué d'une coiffe terminale 41 à laquelle est solidarisé un fourreau de guidage 42 tubulaire, dans lequel est pratiquée la portée interne 40 de guidage.

L'amplitude du déplacement axial autorisé de l'équipage mobile 4 correspond et détermine l'amplitude du mouvement axial du pointeau 17 entre sa position de fermeture et sa position d'ouverture. On conçoit que par réglage de l'amplitude de la course de l'équipage mobile 4 est ajustée l'amplitude de la course du pointeau 17.

Il y a lieu de pouvoir régler la position du pointeau 17 et ce de manière aisée depuis l'extérieur. À cet effet la tringle de commande 15 comporte un dispositif de réglage 150 engagé d'une part dans un perçage traversant de la disposition de paroi transversale 3 et dans un perçage traversant pratiqué dans la coiffe 41 de l'équipage mobile 4 et ce dans l'axe de l'amortisseur.

Selon la forme préférée de réalisation, ce dispositif de réglage est constitué d'un embout fileté 150 fixé axialement, par exemple par vissage, à la tringle de manoeuvre 15 et engagé en vissage dans le perçage traversant de la coiffe 41, ce perçage se présentant sous la forme d'un taraudage.

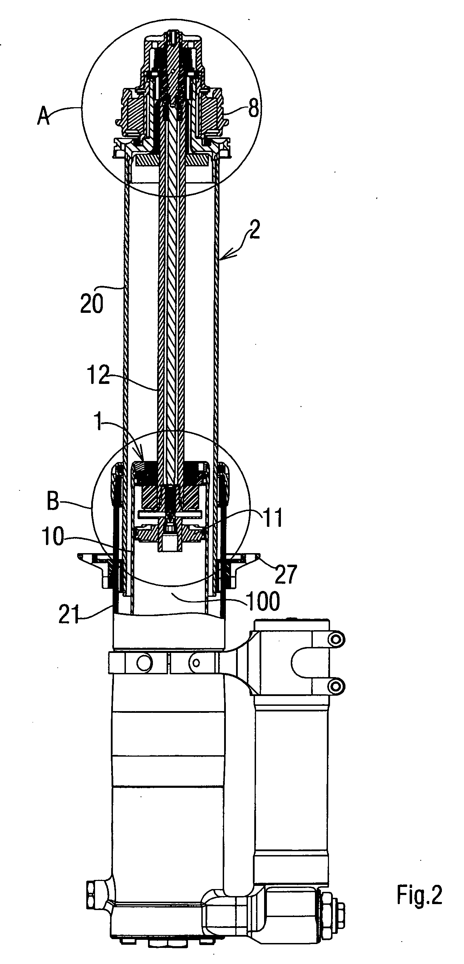

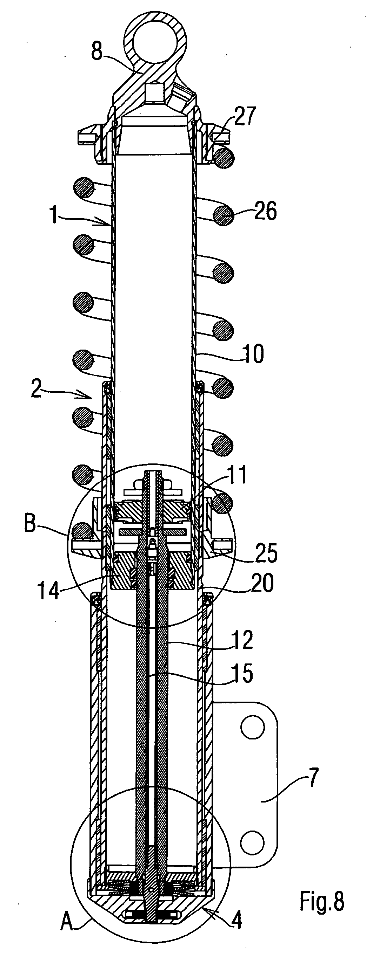

Avantageusement, l'embout fileté 150 comporte une terminaison de section droite hexagonale soit en creux sous forme d'un alésage borgne (figures 2, 3, 5) soit en relief (figures 8, 9, 11) sous forme d'un six pans, afin de pouvoir recevoir un couple de manoeuvre en rotation en vue du réglage de la position du pointeau 17.

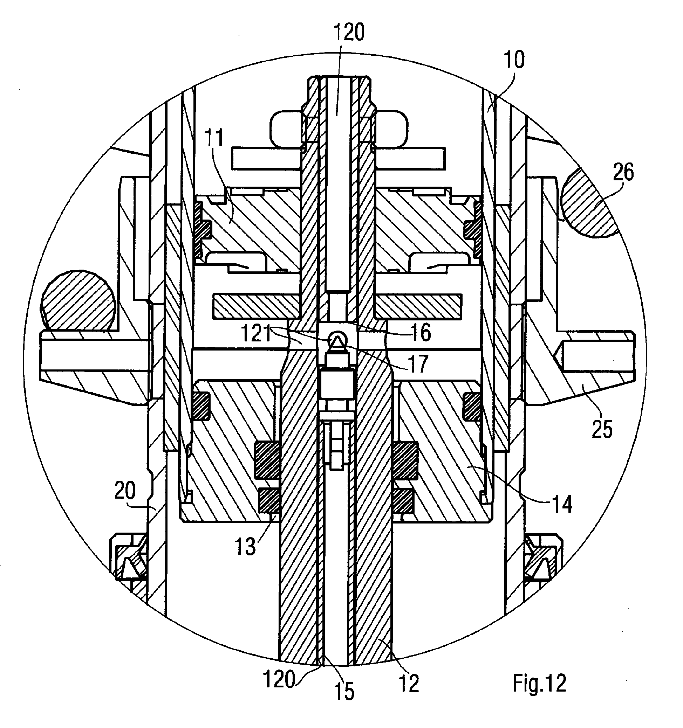

Selon la forme de réalisation objet des figures 1 à 6, le couple de manoeuvre sera imprimé à l'embout 150 à l'aide d'une clé à six pans, indépendante du système d'amortisseur, tandis que pour ce qui concerne la forme de réalisation objet des figures 7 et 12, le couple de manoeuvre sera imprimé à l'aide d'une molette 155 engagée dans une cage formée dans la coiffe 41 de l'équipage mobile 4.

Selon la forme avantageuse de réalisation, l'embout fileté 150 est équipé d'un perçage diamétral traversant 151 dans lequel sont montées deux billes d'indexation 152 repoussées par un organe élastique, non représenté, vers des creux d'indexation 122 pratiqués dans la tige 12 de l'amortisseur. L'organe élastique est monté dans le perçage diamétral 151 entre les deux billes 152.

L'équipage mobile 4 et la disposition de paroi transversale 3 déterminent une chambre 5 qui peut recevoir un moyen élastique 6 agissant en poussée tant sur l'équipage mobile 4 que sur l'agencement de paroi transversale 3, dans le sens de l'ouverture du dispositif de décharge.

La largeur de la chambre 5, mesurée axialement entre la coiffe de l'équipage mobile 4 et la disposition de paroi transversale 3, lorsque le dispositif de décharge est en position d'ouverture, peut être ajustable.

Par ajustement de la largeur de la chambre 5 il est possible de régler le degré de précharge du moyen élastique 6 et par voie de conséquence, le seuil de déclenchement du dispositif de décharge.

Pour ajuster la largeur de la chambre, la coiffe 41 présente un taraudage interne prévu pour coopérer en vissage avec un filetage du fourreau 42 de l'équipage mobile. La largeur de la chambre est réglée par déplacement axial de la coiffe 41 sur le fourreau en la vissant plus ou moins sur ce dernier. Selon une autre forme de réalisation, le réglage de la précharge est opéré en introduisant des cales d'épaisseurs appropriées dans la chambre 5.

Selon une première forme de réalisation, le moyen élastique 6 est constitué par un ressort de compression à spires non jointives.

Selon une autre forme de réalisation, le moyen élastique 6 est constitué par un empilage de rondelles élastiques coniques par exemple du type de celles connues sous le nom commercial de « BELLEVILLE ».

Selon une autre forme de réalisation, le moyen élastique 6 est constitué par un bloc d'élastomère.

Selon encore une autre forme de réalisation, la chambre est étanche 5 et le moyen élastique 6 est constitué par un fluide sous pression par exemple de l'air.

Selon une première forme de réalisation, telle que représentée en figures 1 à 6, la disposition de paroi transversale 3 comprend une tête 32 sous forme d'embout tubulaire, fixée rigidement au premier tube 20 et prolongeant axialement ce dernier, un bouchon d'obturation 33, engagé en vissage dans un taraudage pratiqué en extrémité de la forme d'embout tubulaire de la tête 32, ledit bouchon 33 comportant un perçage traversant axial dans lequel est monté en fixation un embout de guidage 34 présentant un alésage axial de guidage dans lequel est guidé axialement le dispositif de réglage 150 associé à la tringle de commande 15. L'embout de guidage 34 présente un collet 341 venant contre un épaulement interne 331 du bouchon d'obturation 33 et extérieurement au dit bouchon, une section filetée sur laquelle est engagé en vissage un écrou de blocage 35 afin que sous l'effet de son vissage sur la section filetée, l'écrou 35 soit appliqué contre le bouchon 33 et que le collet 341 de l'embout de guidage 34 soit sollicité vers et soit appliqué contre l'épaulement 331 du bouchon 33.

L'écrou 35, présente une forme de fourreau tubulaire traversée de part en part par le dispositif de réglage 150, le moyen élastique 6 étant engagé sur ladite forme tubulaire.

Selon la forme de réalisation objet des figures 1 à 6, le fourreau 42 de l'équipage mobile 4 est immobilisé en rotation par rapport à la tête 32. À cette fin, le fourreau 42, à l'opposé de la coiffe 41, présente une forme interne de section droite polygonale. La tête 32 présente un bourrelet annulaire de section droite polygonale et le fourreau par sa forme polygonale interne est engagé en coulissement sur le bourrelet de la tête.

Toujours selon cette forme de réalisation, la disposition de paroi transversale 3 présente deux butées 30, 31 distantes l'une de l'autre, aptes à limiter le mouvement axial de l'équipage mobile 4 par rapport au premier tube 20. L'une des deux butées, la butée 30, est constituée un collet que présente le bouchon d'obturation 33, cette butée formant saillie annulaire par rapport à l'embout tubulaire de la tête 32, l'autre butée, la butée 31, est constituée par l'une des faces normales à l'axe longitudinal, que présente la tête.

Selon cette forme de réalisation, le fourreau 42 de l'équipage mobile 4 comporte un épaulement interne 42a destiné à venir contre la butée 30 du bouchon d'obturation 33 en position de dégagement du passage de décharge.

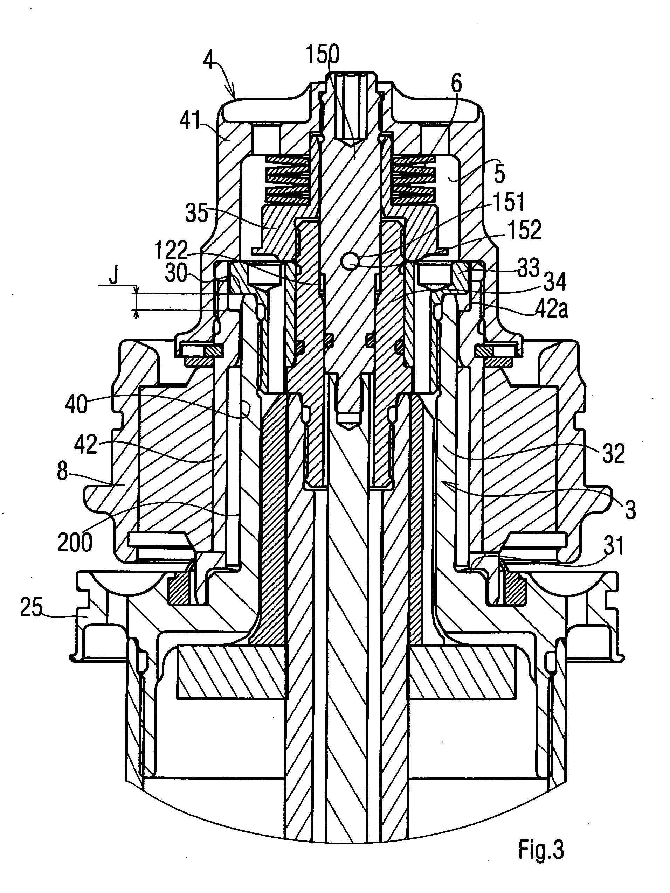

L'amplitude du déplacement axial de l'équipage mobile par rapport au tube 20 et par rapport à la disposition de paroi transversale 3 est représentée sous la forme du jeu J visible en figure 3. La valeur de cette amplitude de déplacement peut être réglée, en ajustant par exemple le degré d'enfoncement du bouchon 33 dans la forme d'embout tubulaire de la tête 32.

Selon la forme de réalisation objet des figures 7 et 12, la disposition de paroi transversale 3 se présente sous la forme d'un disque comportant un filetage par lequel elle est engagée en vissage dans un taraudage du premier tube 20 pour être fixée à ce dernier.

L'une des butées, la butée 31, apte à limiter le mouvement axial de l'équipage mobile est constituée par la face du disque 3, interne à la chambre 5, la coiffe 41 de l'équipage mobile 4, par sa face interne à la chambre 5, étant destinée à venir buter contre le disque 3 en position d'obturation totale ou partielle du passage de décharge. L'autre butée, la butée 30 est constituée par un épaulement de la portée de guidage 200 contre lequel est destiné à venir buter un épaulement interne 42a du fourreau 42 de l'équipage mobile 4.

Le moyen 7 de fixation à la partie non suspendue du véhicule est constitué comme connu par une chape équipée d'axes transversaux de fixation. Pour ce qui concerne la première forme de réalisation du système d'amortissement, le moyen 7 est fixé au tube 21 tandis que pour ce qui concerne la seconde forme de réalisation, le moyen 7 est fixé au fourreau 42 de l'équipage mobile 4.

Le moyen de fixation 8 à la partie suspendue, pour ce qui concerne la première forme de réalisation du système d'amortissement, est fixé au fourreau 42 de l'équipage mobile et se présente sous la forme d'une douille tandis que pour ce qui concerne la seconde forme de réalisation du système d'amortissement, le moyen de fixation 8 est fixé au corps 10 de l'amortisseur et se présente sous la forme d'un anneau.

On a précédemment décrit un moyen de commande du pointeau 17 constitué par une tringle rigide. En variante, le moyen de commande est constitué par un fluide hydraulique introduit dans l'alésage 120. Selon cette forme de réalisation, l'équipage mobile commande un piston monté en coulissement dans la tige du piston et le pointeau de commande, équipé de joints d'étanchéité se déplace vers le siège 16 à l'encontre de l'action exercée par un organe élastique. Cet organe élastique pourra être monté entre le siège 16 et le pointeau 17.

## Revendications

1. Système d'amortissement à détente rapide, monté en jambe de force, comprenant un amortisseur (1) à détente rapide constitué d'un corps d'amortisseur (10) dans lequel est formé un alésage (100) recevant en glissement un piston (11) avec tige (12), divisant le volume interne du corps d'amortisseur (10) en deux chambres de travail en relation l'une avec l'autre par l'intermédiaire de moyens calibrés (110) de passage de fluide, portés par le piston, dont la tige creuse (12) reçoit un moyen de commande (15) d'un dispositif de décharge associé au piston (11), et pouvant prendre une position d'ouverture d'un passage de décharge entre les deux chambres de travail permettant une détente rapide et une position de fermeture totale ou partielle interdisant la détente rapide, ledit système comportant un agencement de jambe de force (2) disposé autour de l'amortisseur et formé par au moins un tube (20), engagé autour de la tige (12) du piston et comportant en extrémité une disposition de paroi transversale (3) à laquelle est solidarisée l'extrémité de la tige (12) de l'amortisseur, et le moyen de commande extérieurement au dit tube coopérant avec un équipage mobile (4) présentant une portée interne de guidage (40) engagée en coulissement sur une portée externe (200) solidaire du tube précité (20), ledit équipage mobile (4) présentant une latitude de déplacement axial limité sur ladite portée (200) et étant destiné à être fixé à l'une des parties suspendues ou non suspendues du véhicule.

2. Système d'amortissement selon la revendication 1 **caractérisé en ce que** le moyen de commande comporte un dispositif de réglage (150) engagé dans un perçage traversant de la disposition de paroi transversale (3).

3. Système d'amortissement selon la revendication 1 ou la revendication 2, **caractérisé en ce que** le moyen de commande est constitué par une tringle de commande (15).

4. Système d'amortissement selon la revendication 1 ou la revendication 2, **caractérisé en ce que** le moyen de commande est constitué par un fluide hydraulique.

5. Système d'amortissement selon l'une quelconque des revendications précédentes, **caractérisé en ce que** l'équipage mobile (4) est constitué d'une coiffe (41) à laquelle est solidarisé un fourreau de guidage, tubulaire, (42) dans lequel est pratiquée la portée interne de guidage (40).

6. Système d'amortissement selon les revendications 2, 3 et 5 prises ensemble, **caractérisé en ce que** le dispositif de réglage (150) est constitué d'un embout fileté fixé axialement à la tringle de manoeuvre (15) et engagé en vissage dans un taraudage traversant pratiqué dans la coiffe (41), ledit embout fileté présentant en extrémité un moyen de manoeuvre.

7. Système d'amortissement selon l'une quelconque des revendications précédentes, **caractérisé en ce que** l'équipage mobile (4) et la disposition de paroi transversale (3) déterminent une chambre (5).

8. Système d'amortissement selon la revendication précédente, **caractérisé en ce que** la chambre (5) reçoit un moyen élastique 6 agissant en poussée sur l'équipage mobile (4) et sur la disposition de paroi transversale (3) dans le sens de l'ouverture du passage de décharge.

9. Système d'amortissement selon la revendication 7 ou la revendication 8, **caractérisé en ce que** la largeur de la chambre 5, mesurée axialement entre la coiffe (41) de l'équipage mobile (4) et la disposition de paroi transversale 3, lorsque le dispositif de décharge est en position d'ouverture, est ajustable.

10. Système d'amortissement selon la revendication 8 ou la revendication 9, **caractérisé en ce que** le moyen élastique (6) est constitué par un ressort de compression à spires.

11. Système d'amortissement selon la revendication 8 ou la revendication 9, **caractérisé en ce que** le moyen élastique (6) est constitué par un empilage de rondelles élastiques coniques.

12. Système d'amortissement selon la revendication 8 ou la revendication 9, **caractérisé en ce que** le moyen élastique (6) est constitué par un bloc d'élastomère.

13. Système d'amortissement selon la revendication 8 ou la revendication 9, **caractérisé en ce que** la chambre (5) est étanche et que le moyen élastique est constitué par un fluide sous pression.

14. Système d'amortissement selon l'une quelconque des revendications précédentes, **caractérisé par** deux butées distantes l'une de l'autre (30, 31), aptes à limiter le mouvement axial de l'équipage mobile (4) par rapport au tube (20), au moins l'une de ces deux butées étant formée sur la disposition de paroi transversale.

15. Système d'amortissement selon l'une quelconque des revendications précédentes, **caractérisé en ce que** la disposition de paroi transversale (3) comprend une tête (32) sous forme d'embout tubulaire, fixée rigidement au tube terminal (20) et prolongeant axialement ce dernier, un bouchon d'obturation (33) étant engagé en vissage dans la tête (32), ledit bouchon (33) comportant un perçage traversant axial dans lequel est monté en fixation un embout de guidage (34) présentant un alésage axial de guidage dans lequel est guidé axialement le dispositif de réglage associé à la tringle de commande (15), ledit embout de guidage (34) présentant un collet venant contre un épaulement interne du bouchon d'obturation (33) et extérieurement au dit bouchon une section filetée sur laquelle est engagée en vissage un écrou de blocage (35) afin que sous l'effet de son vissage sur la section filetée, l'écrou (35) soit appliqué contre le bouchon (33) et le collet de l'embout de guidage soit sollicité vers l'épaulement du bouchon (33), ladite disposition de paroi transversale (3) présentant deux butées distantes l'une de l'autre (30, 31), aptes à limiter le mouvement axial de l'équipage mobile (4) par rapport au tube (20), l'une des deux butées étant constituée par un collet que présente le bouchon d'obturation (33), ledit collet formant saillie annulaire par rapport à l'embout tubulaire de la tête (32), l'autre butée étant constituée par l'une des faces normales à l'axe longitudinal, que présente la tête (32), le fourreau (42) de l'équipage mobile (4) comportant un épaulement interne (42a) prévu pour venir en butée contre le collet du bouchon d'obturation.

16. Système d'amortissement selon les revendications 6 et 15 prises ensembles, **caractérisé en ce que** l'écrou (35) présente une forme de fourreau tubulaire traversée par le dispositif de réglage (150), le moyen élastique (6) étant enfilé sur ladite forme tubulaire.

17. Système d'amortissement selon les revendications 5, 9 et 15 prises ensemble, **caractérisé en ce que** la coiffe (41) présente un taraudage par lequel elle est vissée sur une section filetée du fourreau de guidage (42) et que ledit fourreau de guidage (42) est immobilisé en rotation par rapport à la tête (3).

18. Système d'amortissement selon la revendication précédente, **caractérisé en ce qu'**à l'opposé de la coiffe (41), le fourreau (42) présente une forme interne de section droite polygonale, que la tête (3) présente un bourrelet annulaire de section droite polygonale et que le fourreau (42) par sa forme polygonale interne est engagé en coulissement sur le bourrelet de la tête.

19. Système d'amortissement selon les revendications 5, 7, et 14 prises ensemble, **caractérisé en ce que** la disposition de paroi transversale (3) se présente sous la forme d'un disque comportant un filetage par lequel elle est engagée en vissage dans un taraudage du premier tube 20 pour être fixée à ce dernier et que le mouvement axial de l'équipage mobile (4) est limité par deux butées (30, 31) dont une, la butée (30) est constituée par un épaulement de la portée de guidage (200) contre lequel est destiné à venir buter un épaulement interne (42a) du fourreau (42) de l'équipage mobile (4) et dont l'autre, la butée (31) est constituée par la face du disque (3), interne à la chambre (5), la coiffe (41) de l'équipage mobile (4), par sa face interne à la chambre (5), étant destinée à venir buter contre le disque (3) en position d'obturation total ou partiel du passage de décharge.

## Claims

1. A rapid-release damping system, mounted as a strut, comprising a rapid-release damper (1) comprising a damper body (10) in which there is formed a bore (100) slidably receiving a piston (11) with a rod (12), dividing the internal volume of the damper body (10) into two working chambers connected to each other by calibrated fluid-passage means (110), carried by the piston, the hollow rod (12) of which receives a means (15) of controlling a discharge device associated with the piston (11), and able to adopt a position of opening a discharge passage between the two working chambers allowing rapid release and a position of total or partial closure preventing rapid release, **characterised in that** said system comprises a strut arrangement (2) disposed around the damper and formed by at least one tube (20), engaged around the rod (12) of the piston and comprising at the end a transverse wall arrangement (3) to which the end of the damper rod (12) is secured, and the means of controlling externally to said tube cooperating with a movable device (4) having an internal guide surface (40) slidably engaged on an external surface (200) secured to the aforementioned tube (20), said movable device (4) having a limited latitude of axial movement on said surface (20) and being intended to be fixed to one of the sprung or unsprung parts of the vehicle.

2. A damping system according to claim 1, **characterised in that** the control means comprises an adjustment device (15) engaged in a piercing passing through the transverse wall arrangement (3).

3. A damping system according to claim 1 or claim 2, **characterised in that** the control means comprises a control linkage (15).

4. A damping system according to claim 1 or claim 2, **characterised in that** the control means comprises a hydraulic fluid.

5. A damping system according to any one of the preceding claims, **characterised in that** the movable device (4) comprises a cover (41) to which there is secured a tubular guide sleeve (42) in which the internal guide surface (40) is formed.

6. A damping system according to claims 2, 3 and 5 taken together, **characterised in that** the adjustment device (150) comprises a threaded end piece fixed axially to the manoeuvring linkage (15) and engaged by screwing in a through thread formed in the cover (41), said threaded end piece having a manoeuvring means at the end.

7. A damping system according to any one of the preceding claims, **characterised in that** the movable device (4) and the transverse wall arrangement (3) determine a chamber (5).

8. A damping system according to the preceding claim, **characterised in that** the chamber (5) receives an elastic means (6) acting so as to thrust on the movable device (4) and on the transverse wall arrangement (3) in the direction of opening of the discharge passage.

9. A damping system according to claim 7 or claim 8, **characterised in that** the width of the chamber (5), measured axially between the cover (41) of the movable device (4) and the transverse wall arrangement (3), when the discharge device in the open position, is adjustable.

10. A damping system according to claim 8 or claim 9, **characterised in that** the elastic means (6) comprises a compression spring with turns.

11. A damping system according to claim 8 or claim 9, **characterised in that** the elastic means (6) comprises a stack of conical elastic washers.

12. A damping system according to claim 8 or claim 9, **characterised in that** the elastic means (6) comprises an elastomer block.

13. A damping system according to claim 8 or claim 9, **characterised in that** the chamber (5) is fluidtight and **in that** the elastic means comprises a pressurised fluid.

14. A damping system according to any one of the preceding claims, **characterised by** two stops distant from each other (30, 31), able to limit the axial movement of the movable device (4) with respect to the tube (20), at least one of these two stops being formed on the transverse wall arrangement.

15. A damping system according to any one of the preceding claims, **characterised in that** the transverse wall arrangement (3) comprises a head (32) in the form of a tubular end piece, rigidly fixed to the end tube (20) and axially extending the latter, a closure plug (33) being engaged by screwing in the head (32), said plug (33) having an axial through piercing in which there is fixedly mounted a guiding end piece (34) having an axial guide bore in which there is axially guided the adjustment device associated with the control linkage (15), said guiding end piece (34) having a collar coming against an internal shoulder on the closure plug (33) and externally to said plug a threaded section on which a lock nut (35) is engaged by screwing so that, under the effect of its screwing on the threaded section, the nut (35) is applied against the plug (33) and the collar of the guiding end piece is urged towards the shoulder of the plug (33), said transverse wall arrangement (3) having two stops distant from each other (30, 31), able to limit the axial movement of the movable device (4) with respect to the tube (20), one of the two stops comprising a collar that the closure plug (33) has, said collar forming an annular projection with respect to the tubular end piece of the head (32), the other stop comprising one of the faces normal to the longitudinal axis, which the head (32) has, the sleeve (42) of the movable device (4) comprising an internal shoulder (42a) designed to come into abutment against the collar of the closure plug.

16. A damping system according to claims 6 and 15 taken together, **characterised in that** the nut (35) has a tubular sleeve shape through which the adjustment device (150) passes, the elastic means (6) being fitted onto said tubular shape.

17. A damping system according to claims 5, 9 and 15 taken together, **characterised in that** the cover (41) has a thread by means of which it is screwed onto a threaded section of the guide sleeve (42) and **in that** said guide sleeve (42) is rotationally immobilised with respect to the head (3).

18. A damping system according to the preceding claim, **characterised in that**, opposite the cover (41), the sleeve (42) has an internal shape with a polygonal cross section, **in that** the head (3) has an annular protrusion with a polygonal cross section and **in that** the sleeve (2), through its internal polygonal shape, is slidably engaged on the protrusion on the head.

19. A damping system according to claims 5, 7 and 14 taken together, **characterised in that** the transverse wall arrangement (3) is in the form of a disc having a thread by means of which it is engaged by screwing in the first tube (20) in order to be fixed to the latter and **in that** the axial movement of the movable device (4) is limited by two stops (30, 31), one of which, the stop (30), comprises a shoulder on the guide surface (200) against which an internal shoulder (42a) of the sleeve (42) of the movable device (4) is intended to come to abut, and the other one of which, the stop (31), comprises the face of the disc (3), internal to the chamber (5), the cover (41) of the movable device (4), through its face internal to the chamber (5), being intended to come to abut against the disc (3) in the total or partial closure position of the discharge passage.

## Patentansprüche

1. Dämpfungssystem mit schneller Entspannung, das als ein Federbein montiert ist, mit einem Stoßdämpfer (1) mit schneller Entspannung, der aus einem Stoßdämpferkörper (10) besteht, in dem eine Bohrung (100) ausgebildet ist, die gleitend einen Kolben (11) mit einer Kolbenstange (12) aufnimmt, der das Innenvolumen des Stoßdämpferkörpers (10) in zwei Arbeitskammern unterteilt, die miteinander mittels kalibrierter Fluiddurchlassvorrichtungen (110) in Verbindung stehen, die vom Kolben getragen sind, dessen hohle Stange (12) ein Steuerungsmittel (15) einer mit dem Kolben (11) zusammenwirkenden Ablassvorrichtung aufnimmt und eine Stellung der Öffnung eines Ablassdurchlasses zwischen den zwei Arbeitskammern, die eine schnelle Entspannung ermöglicht, und eine Stellung des vollen oder teilweise Verschlusses, welche die schnelle Entspannung verhindert, einnehmen kann, **dadurch gekennzeichnet, dass** das System eine Federbeineinrichtung (2) aufweist, die rings um den Stoßdämpfer angeordnet und von mindestens einem rings um die Stange (12) des Kolbens eingesetzten Rohr (20) gebildet ist und am Ende eine Anordnung einer Querwand (3) aufweist, mit der das Ende der Stange (12) des Stoßdämpfers fest verbunden ist, und das außerhalb dieses Rohrs angeordnete Steuerungsmittel mit einem beweglichen Element (4) zusammenwirkt, das eine innere Führungsfläche (40) aufweist, die gleitend auf einer mit dem erwähnten Rohr (20) fest verbundenen äußeren Auflagefläche (200) sitzt, wobei das bewegliche Element (4) auf der Auflagefläche (200) ein begrenztes axiales Verschiebungsspiel hat und zur Befestigung an einem der aufgehängten oder nicht aufgehängten Teile des Fahrzeugs bestimmt ist.

2. Dämpfungssystem nach Anspruch 1, **dadurch gekennzeichnet, dass** das Steuerungsmittel eine Regelungsvorrichtung (150) aufweist, die in eine die Anordnung der Querwand (3) durchsetzende Bohrung eingesetzt ist.

3. Dämpfungssystem nach Anspruch 1 oder Anspruch 2, **dadurch gekennzeichnet, dass** das Steuerungsmittel aus einer Steuerstange (15) besteht.

4. Dämpfungssystem nach Anspruch 1 oder Anspruch 2, **dadurch gekennzeichnet, dass** das Steuerungsmittel aus einem Hydraulikfluid besteht.

5. Dämpfungssystem nach einem der vorangehenden Ansprüche, **dadurch gekennzeichnet, dass** das bewegliche Element (4) aus einer Kappe (41) besteht, mit der eine rohrförmige Führungshülse (42) fest verbunden ist, in der die innere Führungsfläche (40) ausgebildet ist.

6. Dämpfungssystem nach den Ansprüchen 2, 3 und 5 zusammengenommen, **dadurch gekennzeichnet, dass** die Regelungsvorrichtung (150) aus einem Ansatzstück mit Gewinde besteht, das axial an der Steuerstange (15) befestigt und in eine in der Kappe (41) ausgebildete Durchgangsbohrung eingeschraubt ist, wobei das Ansatzstück mit Gewinde am Ende ein Betätigungsmittel aufweist.

7. Dämpfungssystem nach einem der vorangehenden Ansprüche, **dadurch gekennzeichnet, dass** das bewegliche Element (4) und die Anordnung der Querwand (3) eine Kammer (5) definieren.

8. Dämpfungssystem nach dem vorangehenden Anspruch, **dadurch gekennzeichnet, dass** die Kammer (5) ein elastisches Mittel (6) aufnimmt, dass im Andruck gegen das bewegliche Element (4) und gegen die Anordnung der Querwand (3) im Sinne des Öffnens des Ablassdurchlasses arbeitet.

9. Dämpfungssystem nach Anspruch 7 oder Anspruch 8, **dadurch gekennzeichnet, dass** die Grösse der Kammer (5) axial gemessen zwischen der Kappe (41) des beweglichen Elements (4) und der Anordnung der Querwand (3) einstellbar ist, wenn die Ablassvorrichtung in der Öffnungsstellung ist.

10. Dämpfungssystem nach Anspruch 8 oder Anspruch 9, **dadurch gekennzeichnet, dass** das elastische Mittel (6) aus einer Spiraldruckfeder besteht.

11. Dämpfungssystem nach Anspruch 8 oder Anspruch 9, **dadurch gekennzeichnet, dass** das elastische Mittel (6) aus einem Stapel von konischen Federscheiben besteht.

12. Dämpfungssystem nach Anspruch 8 oder Anspruch 9, **dadurch gekennzeichnet, dass** das elastische Mittel aus einem Block von Elastomer besteht.

13. Dämpfungssystem nach Anspruch 8 oder Anspruch 9, **dadurch gekennzeichnet, dass** die Kammer (5) dicht ist und das elastische Mittel aus einem unter Druck stehenden Fluid besteht.

14. Dämpfungssystem nach einem der vorangehenden Ansprüche, **gekennzeichnet durch** zwei voneinander beabstandete Anschläge (30, 31), welche geeignet sind, die axiale Bewegung des beweglichen Elements (4) bezüglich des Rohrs (20) zu begrenzen, wobei mindestens einer dieser zwei Anschläge auf der Anordnung der Querwand gebildet ist.

15. Dämpfungssystem nach einem der vorangehenden Ansprüche, **dadurch gekennzeichnet, dass** die Anordnung der Querwand (3) einen Kopf (32) in Form eines rohrförmigen Ansatzstückes aufweist, das starr am Endrohr (20) befestigt ist und dieses axial verlängert, wobei ein Verschlussstopfen (33) in den Kopf (32) eingeschraubt ist und dieser Stopfen (33) eine axiale Durchgangsbohrung aufweist, in der ein Führungsansatzstück (34) befestigt ist, das eine axiale Führungsbohrung aufweist, in der die mit der Steuerstange (15) zusammenwirkenden Regelungsvorrichtung axial geführt ist, wobei das Führungsansatzstück (34) einen Kragen aufweist, der in Anlage gegen eine Innenschulter des Verschlussstopfens (33) kommt, und außerhalb des Stopfens einen Gewindeabschnitt aufweist, auf den eine Blockierungsmutter (35) aufgeschraubt ist, so dass unter der Wirkung ihres Aufschraubens auf den Gewindeabschnitt die Mutter (35) gegen den Stopfen (33) angedrückt ist und der Kragen des Führungsansatzstückes gegen die Schulter des Stopfens (33) beaufschlagt ist, wobei die Anordnung der Querwand (3) zwei voneinander beabstandete Anschläge (30, 31) aufweist, welche dazu geeignet sind, die axiale Bewegung des beweglichen Elements (4) bezüglich des Rohrs (20) zu begrenzen, wobei der eine der zwei Anschläge aus einem Kragen besteht, den der Verschlussstopfen (33) aufweist, wobei der Kragen bezüglich des rohrförmigen Ansatzstückes des Kopfes (32) ringförmig vorsteht, und der andere Anschlag von einer der beiden zur Längsachse normalen Flächen gebildet ist, welche der Kopf (32) aufweist, wobei die Hülse (42) des beweglichen Elements (4) eine Innenschulter (42a) aufweist, die bestimmungsgemäß in Anschlag gegen den Kragen des Verschlussstopfens gelangt.

16. Dämpfungssystem nach den Ansprüchen 6 und 15 zusammengenommen, **dadurch gekennzeichnet, dass** die Mutter (35) die Form einer rohrförmigen Hülse aufweist, die von der Regelungsvorrichtung (150) durchsetzt ist, wobei das elastische Mittel (6) auf die rohrförmige Form aufgeschraubt ist.

17. Dämpfungssystem nach den Ansprüchen 5, 9 und 15 zusammengenommen, **dadurch gekennzeichnet, dass** die Kappe (41) ein Gewinde aufweist, mit dessen Hilfe sie auf einen Gewindeabschnitt der Führungshülse (42) aufgeschraubt ist, und dass die Führungshülse (42) bezüglich des Kopfes (3) drehfest gehalten ist.

18. Dämpfungssystem nach dem vorangehenden Anspruch, **dadurch gekennzeichnet, dass** gegenüber der Kappe (41) die Hülse (42) innen einen mehreckigen Querschnitt aufweist, dass der Kopf (3) einen Ringwulst mit mehreckigem Querschnitt aufweist und dass die Hülse (42) durch ihre mehreckige innere Form gleitend auf dem Wulst des Kopfes sitzt.

19. Dämpfungssystem nach den Ansprüchen 5, 7 und 14 zusammengenommen, **dadurch gekennzeichnet, dass** die Anordnung der Querwand (3) in Form einer Scheibe vorliegt, die ein Gewinde aufweist, durch das sie in ein Gewinde des ersten Rohrs (20) eingeschraubt ist, so dass sie an letzterem befestigt ist, und dass die axiale Bewegung des beweglichen Elements (4) durch zwei Anschläge (30, 31) begrenzt ist, von denen der eine, der Anschlag (30), von einer Schulter der Führungsfläche (200) gebildet ist, gegen die eine Innenschulter (42a) der Hülse (42) des beweglichen Elements (4) anschlägt, und dessen anderer Anschlag (31) von der im Inneren der Kammer (5) liegenden Fläche der Scheibe (3) gebildet ist, wobei die Kappe (41) des beweglichen Elements (4) durch ihre in der Kammer (5) liegende Fläche in Anschlag gegen die Scheibe (3) in der Stellung des teilweisen oder vollständigen Verschlusses des Ablassdurchlasses gelangt.
